Europäisches Patentamt

European Patent Office

Office européen des brevets

(11) Publication number: **0 392 044**

**A1**

(12) **EUROPEAN PATENT APPLICATION**

(21) Application number: **89106469.3**

(22) Date of filing: **12.04.89**

(51) Int. Cl.5: **E04H 6/18, B65G 1/10**

(43) Date of publication of application:
**17.10.90 Bulletin 90/42**

(84) Designated Contracting States:
**AT BE CH DE ES FR GB GR IT LI LU NL SE**

(71) Applicant: **Tseng, Wen-Kung**
**No. 57, Chin Nian 2nd Road**
**Kaohsiung(TW)**

(72) Inventor: **Tseng, Wen-Kung**
**No. 57, Chin Nian 2nd Road**
**Kaohsiung(TW)**

(74) Representative: **LOUIS, PÖHLAU, LOHRENTZ &**
**SEGETH**
**Kesslerplatz 1 Postfach 3055**
**D-8500 Nürnberg-1(DE)**

(54) **Multi-floor storage facilities.**

(57) Multi-floor storage facilities constructed in the ground comprises a plurality of frame units (1) consisting of an outer frame (11) immovable and an inner frame (12) movable up and down inside the outer frame and an elevating system (2) to elevate or lower the inner frame, which is divided horizontally into a plurality of floors to be used as storerooms. It can economize the dimension of the land for building the storage facilities.

FIG. 3

EP 0 392 044 A1

## MULTI-FLOOR STORAGE FACILITIES

### BACKGROUND OF THE INVENTION

Multi-floor storage facilities are quite necessary for storing and taking out goods, which should be kept classified in good order, and the storing space have to be planned properly for the convenience of loading or unloading operation.

For example, a Japanese patent application titled "A multi-shelved warehouse", Ser. No. 66856/1986 filed March 24, 1986, includes a warehouse wherein a forklift truck is utilized to transport goods to be stored in the warehouse, and the storing shelves are set constant, and the height of the warehouse is restricted by the height of the forklift. Besides, much space in the warehouse has to be reserved for the operation of the forklift. Though the application can save high constructing cost more or less, but still cannot save the expanditure for the land needed.

### SUMMARY OF THE INVENTION

The object of this invention is to provide multi-floor storage facilities, which can make the most of the land, even if the land has an irregular shape.

The multi-floor storage facilities in accordance with the present invention are to be built in the ground, comprising a plurality of frame units consisting of an outer immovable frame made of steel and an inner movable frame possible to be moved up and down inside the outer frame and an elevating system for elevating or lowering the inner frame.

One unit of the frame includes the outer frame and the inner frame. The inner frame is divided horizontally into a plurality of floors used as storerooms with floor boards, possible to be elevated or lowered by the elevating system to any position such that the floor of each storeroom can come to the same level as the ground surface for putting in or taking out goods.

The elevating system is to be set on the top of the outer frame, comprising a motor, a shaft to be rotated by the motor and a wire rope having one end fixed on the shaft and the other end fastened firmly at the bottom of the inner frame. If the motor rotates the shaft, the wire rope is wound up or lowered down by the shaft so that the inner frame can be elevated up or lowered down. Besides, each storeroom of the inner frame is provided with an electric switch to control the motor for stopping the inner frame at any position making the floor of each storeroom to be at the same level as the ground surface.

In addition, rails are provided on the top surface of the outer frame and each floor of the inner frame, possible to be connected with eah other for a platform truck to move on for transporting goods in or out of the storeroom.

### BRIEF DESCRIPTION OF THE DRAWINGS

This invention will now be described in detail with reference to accompanying drawings wherein:

Figure 1 is an upside view of the multi-floor storage facilities in accordance with the present invention;

Figure 2 is a cross-sectional view taken along line of Figure 1;

Figure 3 is a view of an operational movement of goods to be stored in the multi-floor storage facilities in accordance with the present invention;

Figure 4 is another view of an operational movement of goods to be stored in the multi-floor storage facilities in accordance with the present invention.

### DETAILED DESCRIPTION OF THE INVENTION

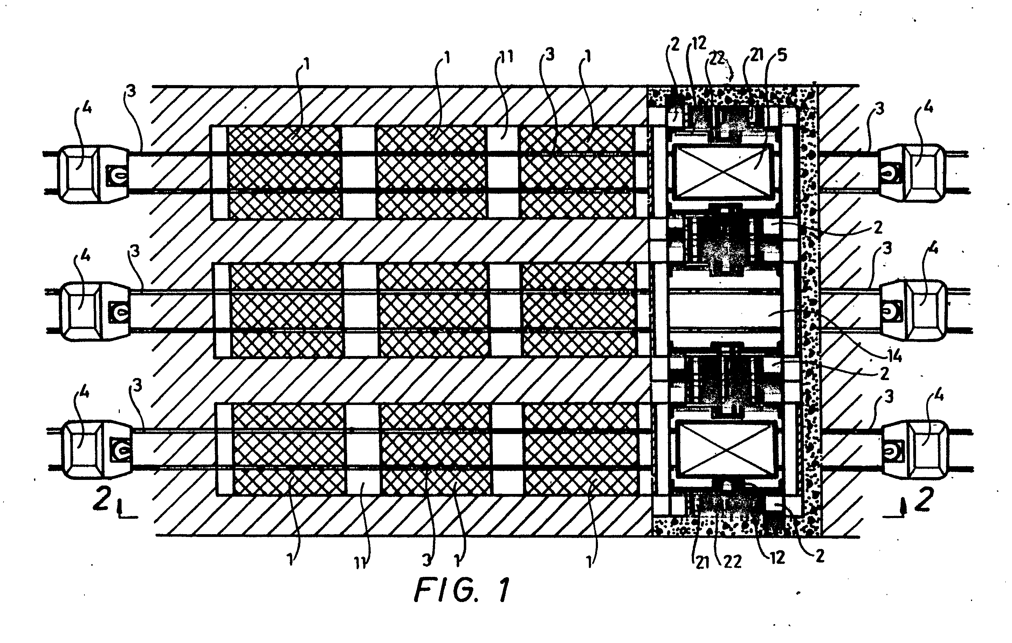

At first, as Figure 1 shows, the multi-floor storage facilities are constructed in the ground of a land, with its frame units connected side by side as many as wanted in the direction of east-west or south-north.

This multi-floor storage facilites comprises a plurality of frame units 1 consisting of an outer frame 11 built immovable in the ground and an inner frame 12 movable up and down in the outer frame 11 and an elevating system 2 which is operated by computer programmed commands, elevating up or lowering down the inner frame 12 to the position wanted.

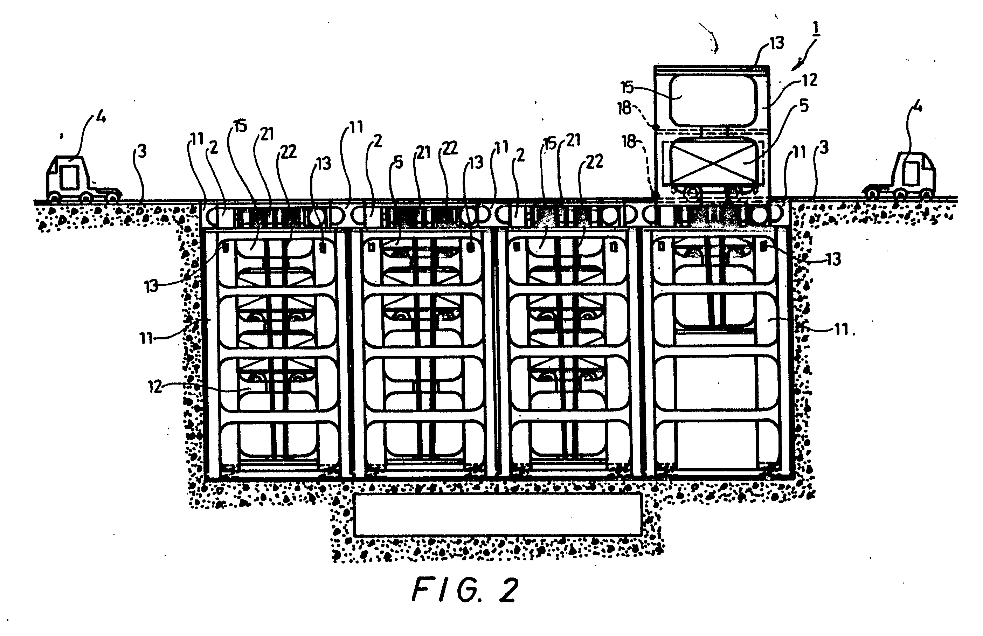

Next, as Figure 2 shows, each inner frame 12 is divided into a plurality of floors used as storerooms 15 by means of floor boards 14. Under the normal position, the inner frame 12 is lowered down in the ground, its top being at the same level as the ground, and a pair of rails 3 are provided on its top surface and each floor for a platform truck 5 to run in or out thereon for transporting goods to be stored or to be taken out.

The elevating system 2 is to be constructed on the top of the outer frame 11, comprising a motor, a shaft 21 to be rotated by the motor, a wire rope 22 having one end fixed on the shaft 21 and the other end fastened firmly at the bottom of the inner frame 12. Therefore, when the motor is started to rotate the shaft 21, which in order winds the wire rope 22 up or loosens it down, elevating or lowering the inner frame 12.

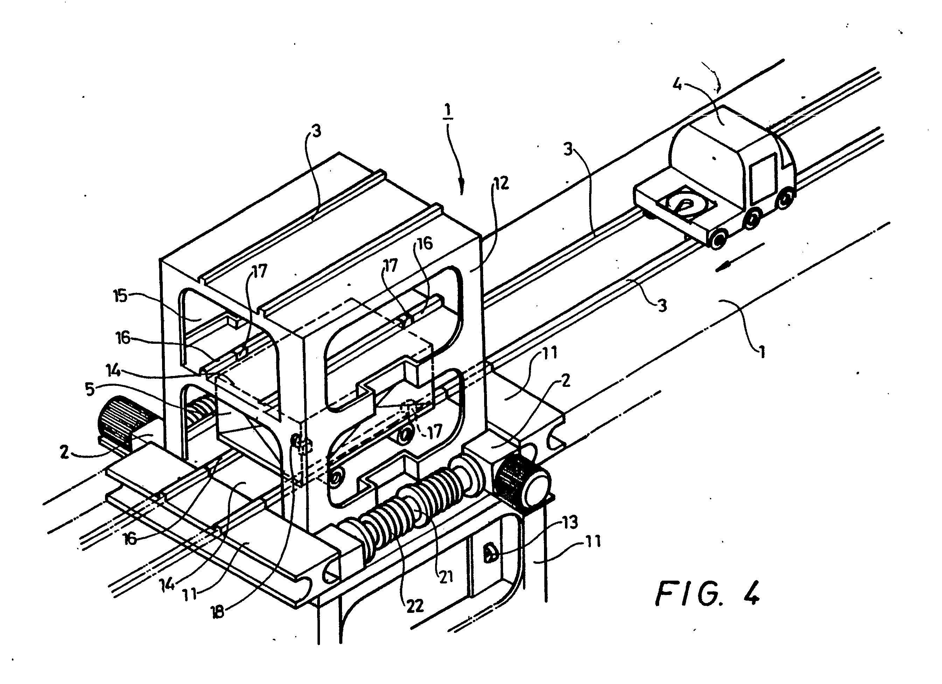

In order to maintain steady movement of the inner frame 12, as Figure 4 shows, the outer frame 11 is provided with sliding wheels 13 to contact with the side wall surfaces of the inner frame 12 so that they may turn with the movement of the inner frame 12 to reduce the friction against the outer frame 11 caused by its movement.

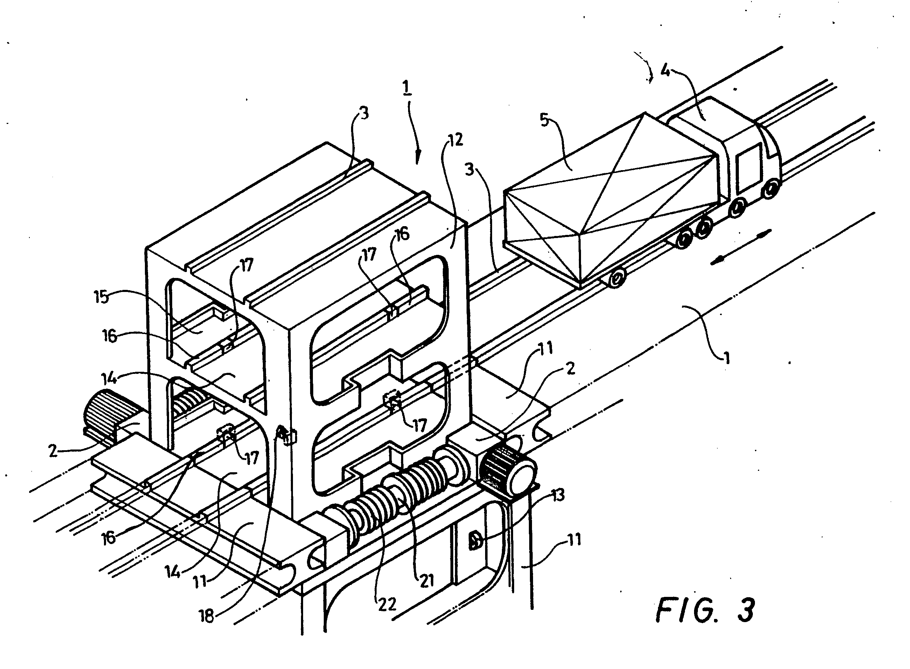

Next, for the purpose of elevating or lowering the inner frame 12 to any floor, electric switches 18 are set on the inside wall surfaces of every floor for stopping the inner frame 12 such that the floor boards can come to the same level as the ground, and the rails 16 can be connected with the rails 3 for the platform truck 5 to run in or out. Then the goods on the platform truck 5 can be loaded or unloaded as shown in Figure 3 and 4.

In addition, a block 17 is provided on each pair of rails 16 to prevent the platform truck 5 from sliding when said truck 5 stops in the inner frame 12.

This multi-floor storage facilities can be constructed at any land of regular or irregular shape, which can then be utilized most effectively. Besides, the unit of the frame 1 can built continuously side by side as many as wanted to the right or the left, or to the front or the rear, and the frame 1 can be made with as many floors as wanted to economize the land used.

## Claims

1. Multi-floor storage facilities comprising;
a plurality of frame units 1 connected side by side, consisting of an outer frame 11 immovable and an inner frame 12 movable and constructed in the ground;
said outer frame 11 made of steel beams and steel posts being constructed constant in the ground and containing the inner frame 12 to be moved up and down therein;
said inner frame 12 divided horizontally into a plurality of floors used as storerooms with floor boards 14, possible to be elevated or lowered inside the outer frame 11 by means of an elevating system 2 so that each floor of said inner frame 12 can be moved to the same level as the ground surface for a platform truck 4 to run in or out on rails for transporting goods in or out of the storerooms and possible to be lowered down totally in the ground so that the top surface of said inner frame 12 can come to the same level as the ground surface so as to enable a truck 4 to go in or out of said inner frame 12; and
an elevating system 2 set on the top of the outer frame 11 for elevating or lowering the inner frame 12.

2. The multi-floor storage facilities as claimed in Claim 1, wherein said elevating system 2 is set on the top of the outer frame 11, comprising a shaft 21 rotated by a motor and a wire rope 22 having one end fixed on the shaft 21 and the other end fastened firmly at the bottom of the inner frame 12 such that the shaft 21 can be rotated to wind up or loosen down the wire rope 22 to elevate or lower the inner frame 12 accordingly.

3. The multi-floor storage facilities as claimed in Claims 1 and 2, wherein said inner frame 12 is provided with an electric switch 18 at each storeroom in order to stop the inner frame 12 such that the floor surface of each storeroom may come to the same level as the ground surface.

4. The multi-floor storage facilities as claimed in Claim 1, wherein rails 3 and 16 are provided on the top of the outer frame 11 and on each floor of the storerooms, possible to connect with each other for a truck 4 to run in or out of the inner frame 12.

FIG. 1

FIG. 2

FIG. 3

EP 0 392 044 A1

FIG. 4

EP 0 392 044 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| E | EP-A-0 341 329 (TSENG WEN-KUNG) <br> * Whole document * <br> --- | 1,2 | E 04 H 6/18 <br> B 65 G 1/10 |
| X | FR-A-1 280 795 (DENARIE) <br> * Whole document * <br> --- | 1,2 | |
| X | US-A-3 717 266 (GENEST) <br> * Whole document * <br> --- | 1,2 | |
| A | DE-U-8 707 961 (WÖHR) <br> * Whole document * <br> --- | 1,2 | |
| A | DE-A-2 834 294 (STARK) <br> * Whole document * <br> ----- | 1,2 | |

TECHNICAL FIELDS SEARCHED (Int. Cl.5)

B 65 G
E 04 H

The present search report has been drawn up for all claims

| Place of search | Date of completion of the search | Examiner |
|---|---|---|
| THE HAGUE | 30-11-1989 | OSTYN T.J.M. |